# EUROPEAN PATENT APPLICATION

(11) **EP 4 023 185 A1**
(43) Date of publication of application: **06.07.2022**
(21) Application number: 20859276.6
(22) Date of filing: 14.08.2020
(51) Int. Cl.: A61C 1/18, A61C 1/05, A61C 1/06, A61C 1/12

(54) **HANDPIECE**

(30) Priority: 26.08.2019 KR 20190104277
(71) Applicant: Denflex Co., Ltd., Seoul 08381 (KR)
(72) Inventor: KIM, Hyung-Woo, Goyang-si Gyeonggi-do 10374 (KR)
(74) Representative: Lermer, Christoph
(86) International application number: PCT/KR2020/010860
(87) International publication number: WO 2021/040299

(57) **Abstract**

Provided is a handpiece in which a predetermined section of a rotational power transmission shaft includes a plurality of flexible rods. The single rotational power transmission shaft is able to change the direction of the rotation center axis of a rotational power source in order to overcome problems, such as rotational power loss, noise, fine vibration, reduced durability, or an increase in volume, caused by a complicated gear connecting structure of a rotational power transmission shaft for changing the direction of the rotation center axis of the rotational power transmission shaft of a related-art rotational power source.

## Description

### Technical Field

The present disclosure relates to a handpiece and, more particularly, to a handpiece in which a predetermined section of a rotational power transmission shaft is comprised of a plurality of flexible rods, such that the single rotational power transmission shaft may change the direction of the rotation center axis of a rotational power source in order to overcome problems, such as rotational power loss, noise, fine vibration, reduced durability, or an increase in volume, caused by a complicated gear connecting structure of a rotational power transmission shaft for changing the direction of the rotation center axis of the rotational power transmission shaft of a related-art rotational power source.

### Background Art

In general, a handpiece is a device enabling a specific operation, such as ablation, grinding, or milling, to be easily performed in a medical field, such as dentistry or orthopedics, a nail art field, a jewelry field, or the like. Such a handpiece is configured to rotate a tool mounted on a head at a speed required in the art, using a motor generating rotational power from electricity or an impeller generating rotational power from compressed air.

In particular, a dental handpiece includes a dental bur, such as a bar, a pointer, or a disk, mounted on a head at the front end of the handpiece in order to provide dental procedures. Rotational power from a rotational power source is transmitted to the dental bur so that the dental bur removes foreign matter within the oral cavity or treats the teeth and the gums during dental procedures.

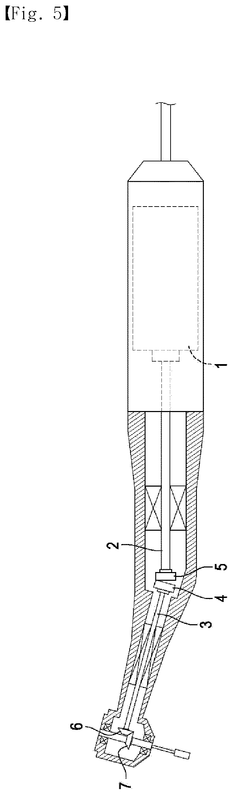

Typically, as illustrated in FIG. 5, a dental handpiece of the related art is designed such that a head thereof is bent upward at a predetermined angle for the ease of treatment or use. In this case, there may be a restriction in that a configuration of connecting two rotational power transmission shafts having gears at the bent portion in which the direction of the rotation center axis changes must be used in order to transmit the rotational power to the head from the rotation center axis of the rotational power source.

That is, as illustrated in FIG. 5, a first rotational power transmission shaft 2 having a gear 5 (e.g. a bevel gear) mounted on the distal end thereof and a second rotational power transmission shaft 3 having a gear 4 (e.g. a bevel gear) mounted on the distal end thereof are connected to each other such that the gears 45 and engaged with each other at the bent portion of the handpiece to transmit the rotational power. When a motor 1 rotates the first rotational power transmission shaft 2, the second rotational power transmission shaft 3 is rotated through the engaged gears 4 and 5, and then, the rotational power is transmitted to the dental bur through bevel gears 6 and 7 provided on the other distal end of the second rotational power transmission shaft 3.

However, the related art as described above has a variety of problems, due to the gear connection structure between the rotational power transmission shafts. Such problems may include rotational power loss due to friction or the like, noise and fine vibration, reduced durability due to gear abrasion, an increase in volume due to the internal disposition of the pair of gears.

### Disclosure

### Technical Problem

Accordingly, the present disclosure has been made keeping in mind the above problems occurring in the related art, and an objective of the present disclosure is to propose a rotational power transmission shaft having a simple structure able to overcome the problems of the related art, such as rotational power loss, noise, fine vibration, reduced durability, an increase in volume, and the like, caused by the related-art gear connection structure for changing the direction of the rotation center axis of the rotational power transmission shaft.

### Technical Solution

In order to accomplish the above objective, the present disclosure may provide a handpiece, with a rotational power source being provided on one side thereof and a tool being coupled to the other side thereof. The handpiece may include: a body having a handle; a head to which the tool is coupled; and a rotational power transmission shaft transmitting rotational power from the rotational power source, provided on a portion of the body, to a portion of the head. A predetermined section of the rotational power transmission shaft is a spiral threaded portion having a helical shape, such that the rotational power transmission shaft is bendable at a portion thereof, in which the spiral threaded portion is provided, to be directed toward the portion of the head. The rotational power transmission shaft extends toward the portion of the head deviating from a rotation center axis of the rotational power source through the spiral threaded portion to transmit the rotational power to the portion of the head.

### Advantageous Effects

According to the present disclosure, the rotational power transmission shaft for transmitting rotational power generated by the rotational power source is provided with a spiral threaded portion in a predetermined section thereof. The rotational power transmission shaft may have flexibility in the spiral section in order to significantly overcome problems, such as rotational power loss, noise, fine vibration, reduced durability, or an increase in volume, caused by the complicated gear connecting structure of the rotational power transmission of related art.

### Description of Drawings

FIG. 1 is a cross-sectional view illustrating a handpiece according to an embodiment of the present disclosure;
FIG. 2 is an enlarged view of the threaded portion of the rotational power transmission shaft according to the present disclosure;
FIG. 3a is a perspective view illustrating the cross-section of a threaded portion of a rotational power transmission shaft according to an embodiment of the present disclosure, and FIG. 3b is a perspective view illustrating the cross-section of a threaded portion of a rotational power transmission shaft according to another embodiment of the present disclosure;
FIG. 4 illustrates the configuration of a speed change gear unit according to the present disclosure; and
FIG. 5 is a cross-sectional view illustrating a handpiece of the related art.

### Mode for Invention

Hereinafter, example embodiments of the present disclosure will be described in more detail with reference to the accompanying drawings.

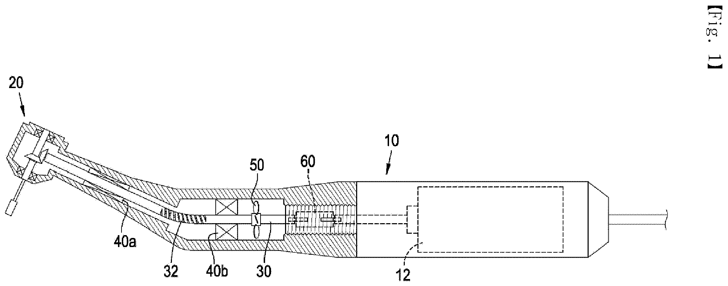

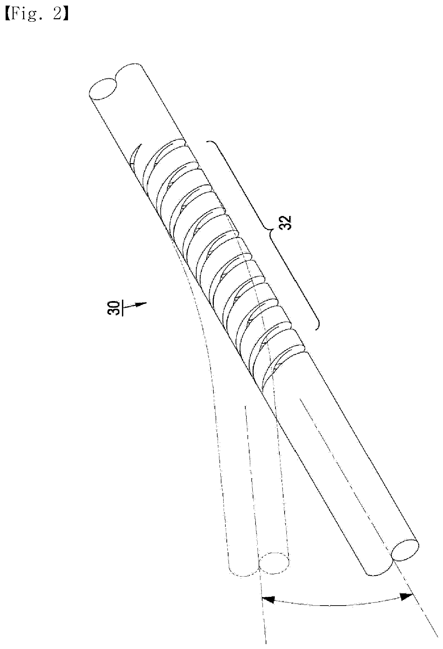

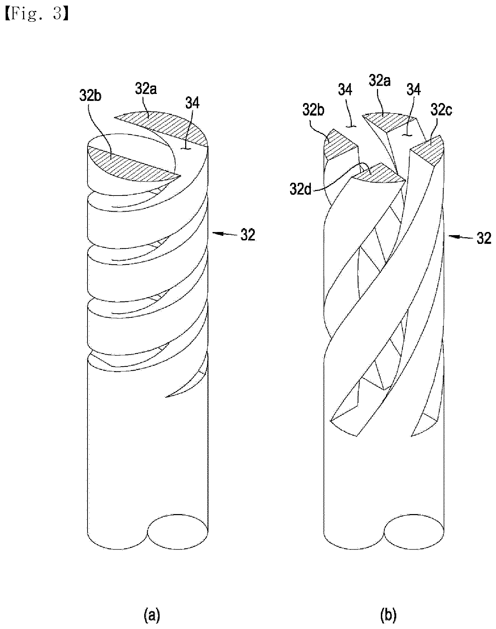

FIG. 1 is a cross-sectional view illustrating a handpiece according to an embodiment of the present disclosure, FIG. 2 is an enlarged view of a threaded portion (i.e. a threaded rod-forming portion) of a rotational power transmission shaft according to the present disclosure, FIG. 3a is a perspective view illustrating the cross-section of a threaded portion of a rotational power transmission shaft according to an embodiment of the present disclosure, and FIG. 3b is a perspective view illustrating the cross-section of a threaded portion of a rotational power transmission shaft according to another embodiment of the present disclosure.

First, referring to FIG. 1, the handpiece according to an embodiment of the present disclosure includes a body 10 having a handle, a head 20 to which a tool is coupled, and a rotational power transmission shaft 30 transmitting rotational power from a rotational power source 12 provided on a portion of the body 10 to a portion of the head 20. The rotational power source 12 may be implemented as a motor generating the rotational power from electricity or an impeller generating the rotational power from compressed air. That is, the rotational power source 12 should be broadly interpreted as being any type of rotation generating device based on an ability to generate rotational power.

As illustrated in FIGS. 1, 2, 3a, and 3b, the spiral threaded portion 32 comprised of spiral rods 32a, 32b, 32c, and 32d having a helical shape is provided in a predetermined section of the rotational power transmission shaft 30. Since the threaded portion 32 of the rotational power transmission shaft 30 is flexible due to the plurality of spiral rods thereof, the rotational power transmission shaft 30 is bent about the bent portion of the threaded portion comprised of the plurality of rods, in the direction toward the head. In this position, the rotational power transmission shaft 30 may rotate and transmit the rotational power. Thus, the rotational power transmission shaft 30 extends without interruption toward a portion of the head deviating from a virtual line extending from the rotation center axis of the rotational power source 12. In this manner, the single structure of the rotational power transmission shaft 30 may transmit the rotational power of the rotational power source 12 to the portion of the head.

Particularly, the spiral threaded portion 32 having the helical shape may have a spring structure comprised of the plurality of rods 32a, 32b, 32c, and 32d. As illustrated in FIG. 3a and 3b, the spiral threaded portion 32 has the spring structure in which the plurality of rods 32a and 32b spirally extend along the rotational power transmission shaft 30. The spring structure may be provided by cutting the rotational power transmission shaft 30 along spiral lines such that the cut portions are penetrated therethrough. Referring to FIGS. 3a and 3b, the cross-sectional structure of the spiral threaded portion 32 includes the plurality of rods 32a, 32b, 32c, and 32d located on both sides of the open portions 34 to face each other. That is, FIG. 3a illustrates the spiral threaded portion 32 comprised of two rods 32a and 32b, while FIG. 3b illustrates the spiral threaded portion 32 comprised of four rods 32a, 32b, 32c, and 32d.

More particularly, bearings 40a and 40b may be further provided in front of and behind the spiral threaded portion 32 comprised of the plurality of rods 32a, 32b, 32c, and 32d to support the rotational power transmission shaft 30 and reduce friction caused by the rotation of the rotational power transmission shaft. Consequently, this structure may significantly reduce shaking even when transmitting the rotational power to the head located away from the rotational power source. In addition, in the case of transmitting the rotational power to a portion located away from the rotational power source, the spiral threaded portion 32 may advantageously reduce rotational vibration that would occur when the degree of straightness of the rotational power transmission shaft is not precise.

Particularly, as illustrated in FIG. 1, rotor blades 50 may be further provided in predetermined positions of the rotational power transmission shaft 30. The rotor blades 50 may serve to generate a current of air following the rotation of the rotational power transmission shaft 30, thereby blowing air along the rotational power transmission shaft. For example, when the rotational power transmission shaft is rotated at a high speed, the bearings provided in front of and behind the spiral threaded portion of the rotational power transmission shaft or provided on the head may generate heat. The rotor blades may blow air along the rotational power transmission shaft to dissipate the heat generated.

More particularly, as illustrated in FIG. 1, a speed change gear unit 60 may be further provided between the rotational power source 12 and the spiral threaded portion 32 in order to selectively increase or reduce the number of revolutions transmitted from the rotational power source 12 to the head.

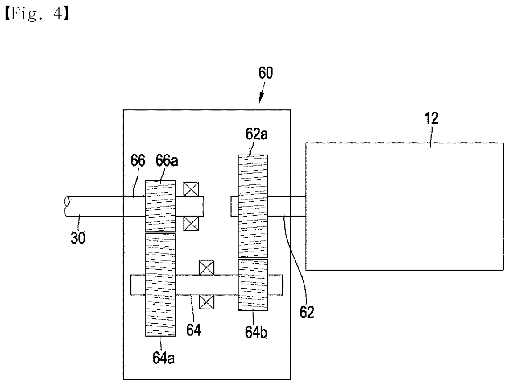

As illustrated in FIG. 4, the speed change gear unit 60 may include rotational power transmission shafts 62, 64, and 66 provided as three parts. This configuration may include: a first speed-changing rotational power transmission shaft 62 extending from a rotation center shaft of the rotational power source; a second speed-changing rotational power transmission shaft 64 rotating in close contact with a gear 62a provided on a predetermined portion of the first 1speed-changing rotational power transmission shaft 62; and a third speed-changing rotational power transmission shaft 66 rotating in close contact with a gear 64a provided on a predetermined portion of the second speed-changing rotational power transmission shaft 64. Here, the second speed-changing rotational power transmission shaft 64 may have a unitary structure in which two gear parts 64a and 64b having different outer diameters and different numbers of gear teeth are independently provided on the upper and rear portions of the speed-changing rotational power transmission shaft. In addition, the rotation center axis of the third speed-changing rotational power transmission shaft 66 may be identical to the rotation center axis of the first speed-changing rotational power transmission shaft 62.

While the present disclosure has been described in detail hereinabove with respect to the specific embodiments with reference to the accompanying drawings, the present disclosure is not limited to such specific structures. Those skilled in the art will appreciate that various modifications, additions, and substitutions are possible, without departing from the scope and spirit of the present disclosure as disclosed in the accompanying claims. However, it should be understood that such design changes, material substitutions, or modified structures fall within the scope of protection of the present disclosure.

## Claims

1. A handpiece, with a rotational power source being provided on one side thereof and a tool being coupled to the other side thereof, the handpiece comprising:
a body having a handle;
a head to which the tool is coupled; and
a rotational power transmission shaft transmitting rotational power from the rotational power source, provided on a portion of the body, to a portion of the head,
wherein a predetermined section of the rotational power transmission shaft comprises a spiral threaded portion having a helical shape, such that the rotational power transmission shaft is bendable at a portion thereof, in which the spiral threaded portion is provided, to be directed toward the portion of the head, and the rotational power transmission shaft extends toward the portion of the head deviating from a rotation center axis of the rotational power source through the spiral threaded portion to transmit the rotational power to the portion of the head.

2. The handpiece of claim 1, wherein the spiral threaded portion has a spring structure comprised of a plurality of spiral rods respectively having a helical shape.

3. The handpiece of claim 1, further comprising one or more bearings provided in front of, behind, or in front of and behind the spiral threaded portion having the helical shape.

4. The handpiece of claim 1, further comprising rotor blades provided in predetermined positions of the rotational power transmission shaft to blow air following rotation of the rotational power transmission shaft.

5. The handpiece of claim 1, further comprising a speed change gear unit provided between the rotational power source and the spiral threaded portion having the helical shape to increase or reduce the number of revolutions transmitted from the rotational power source to the rotational power transmission shaft.

6. The handpiece of claim 1, wherein the rotational power source comprises a motor generating the rotational power from electricity or an impeller generating the rotational power from compressed air.
